# EUROPÄISCHE PATENTSCHRIFT

(11) **EP 0 478 926 B1**
(45) Veröffentlichungstag und Bekanntmachung des Hinweises auf die Patenterteilung: **03.07.1996**
(21) Anmeldenummer: 91113182.9
(22) Anmeldetag: 06.08.1991
(51) Int. Cl.: H04N 5/60

(54) **Fernsehsignalempfangsvorrichtung zum Empfang von Fernsehsignalen mit mehreren Sprachkanälen**
Television signal receiving device for receiving television signals with a plurality of language channels
Dispositif de réception de signaux de télévision pour la réception de signaux de télévision à plusieurs canaux linguistiques

(30) Priorität: 05.10.1990 DE 4031592
(43) Veröffentlichungstag der Anmeldung: 08.04.1992
(73) Patentinhaber: GRUNDIG E.M.V. Elektro-Mechanische Versuchsanstalt Max Grundig GmbH & Co. KG, D-90762 Fürth (DE)
(72) Erfinder: Hilpert, Werner, Grundig E.M.V., Max Grundig, W-8510 Fuerth (DE)

(56) Entgegenhaltungen:
- EP-A- 0 096 381
- EP-A- 0 239 760
- EP-A- 0 340 643
- US-A- 4 703 369
- US-A- 4 748 619
- UNION EUROPEENNE DE RADIODIFFUSION, Tech. 3258-F, Appendice à la partie 5, Oktober 1986, Seiten 139-185,291-301, Brussel, BE; "Spécification des systèmes de la famille MAC/paquets"

## Beschreibung

Die Erfindung betrifft eine Fernsehsignalempfangsvorrichtung mit den im Oberbegriff des Anspruchs 1 angegebenen Merkmalen .

Ausgangspunkt für das Satelliten - Fernsehen ist der Gedanke , eine länderübergreifende Übertragung von Fernsehsendungen vorzunehmen . Hierzu soll für alle Länder ein gemeinsamer Bildinhalt übertragen werden . Die zugehörige Tonübertragung soll aber in vielen verschiedenen Sprachen erfolgen , so daß beispielsweise Zuschauer in Deutschland den Ton in deutscher Sprache , Zuschauer in England den Ton in englischer Sprache , Zuschauer in Frankreich den Ton in französischer Sprache empfangen können , usw . Zum Heraussuchen der gewünschten Sprache muß der Benutzer eine oder mehrere Tasten betätigen , welche entweder am Empfangsgerät selbst oder an einer Fernbedienung angeordnet sind . Dies ist aber umständlich und zeitaufwendig .

Aus der EP-A-0239760 ist es bereits bekannt , vor der Inbetriebnahme eines Empfangsgerätes verschiedenen Sprachen verschiedene Prioritäten zuzuordnen und diese Prioritätszuordnung im Empfangsgerät abzuspeichern . Beim Empfang eines Fernsehsignals wird dann aus den angebotenen Sprachen stets diejenige mit der höchsten Priorität herausgesucht und wiedergegeben .

Weiterhin ist aus der Zeitschrift "hifi & tv " ,Heft 15 , S.5 , ein Videorecorder bekannt , bei dessen Programmierung Benutzerführungsinformationen auf dem Bildschirm eines angeschlossenen Fernsehempfängers dargestellt werden . Diese Benutzerführungsinformationen können in einer von mehreren Sprachen angezeigt werden . Die Auswahl der gewünschten Sprache erfolgt mittels der Fernbedienung des Videorecorders .

Aus der EP-A-0340 643 ist ein Fernsehempfänger bekannt, welcher eine Steuerschaltung aufweist, die in Abhängigkeit vom momentan empfangenen Signal den Inhalt einer am Bildschirm dargestellten Menuedarstellung verändert. Dadurch wird erreicht, daß dem Benutzer immer nur sinnvolle Benutzerführungsinformationen angezeigt werden.

Die Aufgabe der Erfindung besteht darin , einen Weg aufzuzeigen , wie bei einer Fernsehsignalempfangsvorrichtung mit den im Oberbegriff des Anspruchs 1 angegebenen Merkmalen aus den gemeinsam mit dem Bildinhalt übertragenen Sprachen automatisch diejenige herausgesucht wird , die den Bedürfnissen des Zuschauers am ehesten gerecht wird .

Diese Aufgabe wird bei einer Fernsehsignalempfangsvorrichtung mit den im Oberbegriff des Anspruchs 1 angegebenen Merkmalen durch die im kennzeichnenden Teil des Anspruchs 1 angegebenen Merkmale gelöst .

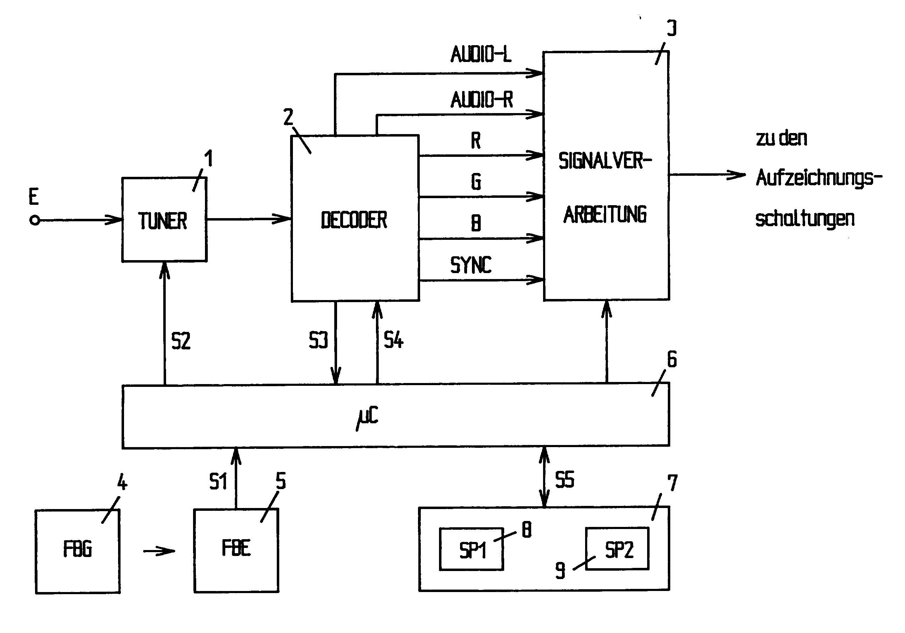

Die Vorteile der Erfindung bestehen insbesondere darin , daß zum Heraussuchen der Sprache , die den Bedürfnissen des Zuschauers am ehesten gerecht wird , eine im Empfangsgerät ohnehin vorhandene Information verwendet wird . Weitere vorteilhafte Eigenschaften der Erfindung ergeben sich aus der Erläuterung eines Ausführungsbeispiels anhand der Figur.

Diese zeigt einen Satelliten-Tuner 1 , einen D2-MAC-Decoder 2 , eine Signalverarbeitungsschaltung 3 , einen Fernbedienungsgeber 4 , einen Fernbedienempfänger 5 , einen Mikrocomputer 6 und einen Speicherblock 7 , welcher eine erste Speichereinheit 8 und eine zweite Speichereinheit 9 aufweist . Die gezeigten Schaltungsteile können beispielsweise Bestandteile eines Videorecorders oder eines Fernsehempfängers sein . Im folgenden wird davon ausgegangen , daß die gezeigten Schaltungsteile in einem Videorecorder angeordnet sind .

Beispielsweise bei der ersten Inbetriebnahme des Videorecorders kann der Benutzer festlegen , in welcher Sprache bei späteren Programmiervorgängen ( Senderprogrammierung , Aufzeichnungsprogrammierung ) eine Benutzerführung am Bildschirm eines an den Videorecorder angeschlossenen Fernsehempfängers erfolgen soll . Dazu sind im ersten Speicherbereich 8 des Speicherblocks 7 verschiedensprachige Benutzerführungsinformationen abgespeichert , aus denen mittels des Fernbedienungsgebers 4 eine ausgewählt werden kann .

Dieser Auswahlvorgang erfolgt dadurch , daß durch Betätigung einer Taste auf dem Fernbedienungsgeber 4 dem Mikrocomputer 6 über den Fernbedienempfänger 5 ein Steuersignal S1 zugeführt wird , aufgrund dessen der Mikrocomputer 6 eine ebenfalls in der ersten Speichereinheit 8 abgespeicherte Übersichtsseite abruft , auf der die Sprachen , in denen eine Benutzerführung möglich ist , tabellarisch aufgelistet sind . Die gewünschte Sprache wird unter Verwendung des Fernbedienungsgebers 4 mittels eines Cursors markiert . Danach wird eine auf dem Fernbedienungsgeber angeordnete Übernahmetaste betätigt , wodurch ein zweites Kennsignal eingegeben wird , welches über den Fernbedienempfänger dem Mikrocomputer 6 zugeführt wird und von dort aus über die Leitung S5 im zweiten Speicherbereich 9 des Speicherblocks 7 abgespeichert wird . Bei diesem zweiten Speicherbereich 9 handelt es sich ebenso wie beim ersten Speicherbereich 8 um einen nichtflüchtigen Speicher ,so daß das die gewünschte Sprache beschreibende zweite Kennsignal auch nach dem Ausschalten der Fernsehsignalempfangsvorrichtung gespeichert bleibt .

Soll nach der Abspeicherung des genannten zweiten Kennsignals Benutzerführungsinformation - beispielsweise zur Programmierung des Empfangsgerätes - dargestellt werden , so erfolgt diese Darstellung stets in der durch das zweite Kennsignal festgelegten Sprache .

Von diesem zweiten , abgespeicherten Kennsignal wird auch beim Empfang eines Satellitenfernsehsignals mit mehreren , verschiedensprachigen Tonkanälen Gebrauch gemacht , wie im folgenden gezeigt wird .

Beim Empfang eines Satellitenfernsehsignals werden dem Eingang E von der sog. " Outdoor-Unit " einer Satellitenempfangsanlage gelieferte Satellitenfernsehsignale zugeführt . Im Satelliten-Tuner 1 wird unter Verwendung eines vom Mikrocomputer 6 erzeugten Steuersignals S2 das in einem der Kanäle übertragene Satellitenfernsehsignal , bei dem es sich beispielsweise um ein D2-MAC-Satellitenfernsehsignal handelt , extrahiert und in ein D2-MAC-Basisbandsignal umgewandelt , welches am Ausgang des Satelliten-Tuners 1 zur Verfügung gestellt wird . Der grundsätzliche Aufbau eines D2-MAC-Signals ist beispielsweise in den Zeitschriften "RTM",1985,H.5,S.229-246 und "NTZ",1986,H.1,S.18-23 beschrieben.

Das D2-MAC-Basisbandsignal , in welchem verschiedensprachige Tonsignale enthalten sind , wird einem D2-MAC-Decoder 2 zugeführt , wie er beispielsweise im Service-Manual des Satelliten-Receivers STR202-D2MAC der Anmelderin gezeigt ist . Dem D2-MAC-Decoder 2 wird vom Mikrocomputer 6 ein Steuersignal S4 zugeführt , welches eine von mehreren Sprachen charakterisiert . Der D2-MAC-Decoder 2 wandelt die im Zeitmultiplex innerhalb der einzelnen Zeilen des D2-MAC- Basisbandsignals übertragenen Chrominanz- und Luminanzsignale in Komponentensignale R,G,B um . Weiterhin extrahiert der D2-MAC-Decoder 2 in Ansprache auf das Steuersignal S4 aus dem im D2-MAC-Basisbandsignal im Zeitmultiplex mit den Chrominanz- und Luminanzsignalen übertragenen Datenpaket , innerhalb dessen die verschiedensprachigen Tonsignale und jeweils zugehörige erste Kennsiggnale enthalten sind , diejenigen Datenblöcke , in denen das durch das Steuersignal S4 charakterisierte Sprachsignal übertragen wird . Das extrahierte Sprachsignal wird am Ausgang des D2-MAC-Decoders 2 in Form eines ersten Tonsignals , welches dem linken Tonkanal entspricht , und eines zweiten Tonsignals , welches dem rechten Tonkanal entspricht , zur Verfügung gestellt . Weiterhin wird im D2-MAC-Decoder 2 ein Synchronsignal erzeugt .

Das zur Auswahl des Sprachkanals verwendete Steuersignal S4 wird wie folgt erzeugt : Die im D2-MAC-Decoder 2 aus dem D2-MAC-Basisbandsignal extrahierten ersten Kennsignale , die Auskunft darüber geben , in welchen Sprachen die den Bildinhalt begleitenden Toninformationen angeboten werden , werden über eine Leitung S3 dem Mikrocomputer 6 zugeführt und dort mit dem in der ersten Speichereinheit 8 abgespeicherten zweiten Kennsignal verglichen . Ergibt der genannte Vergleich , daß die durch das zweite Kennsignal vorgegebene Sprache als den Bildinhalt begleitende Ton - bzw. Sprachinformation vorliegt , dann erzeugt der Mikrocomputer 6 das Steuersignal S4 derart , daß die durch das abgespeicherte zweite Kennsignal charakterisierte Sprache ausgewählt wird.

Die Ausgangssignale des D2-MAC-Decoders 2 werden einer Signalverarbeitungsschaltung 3 zugeführt und dort in bekannter Weise in aufzeichenbare Signale umgewandelt .

Bei der Erfindung wird somit ein bereits im Empfangsgerät abgespeichertes Kennsignal für diejenige Sprache , die der Zuschauer zur Darstellung von Benutzerführungsinformationen ausgewählt hat , auch zur Sprachauswahl beim Vorliegen von simultan angebotenen , verschiedensprachigen Tonkanälen verwendet .

## Patentansprüche

1. Fernsehsignalempfangsvorrichtung zum Empfang von Femsehsignalen, bei denen die den Bildinhalt begleitende Sprachinformation simultan in verschiedenen Sprachen angeboten wird, wobei zusätzlich zur Bild- und Sprachinformation erste Kennsignale übertragen werden, welche die einzelnen übertragenen Sprachen charakterisieren und einen selektiven Zugriff auf jede dieser Sprachen erlauben, mit
- einer Bedieneinheit zur Eingabe eines zweiten Kennsignals,
- einer Speichereinheit zur Abspeicherung des zweiten Kennsignals,
- einer Steuereinheit, in der beim Empfang eines Femsehsignals ein Vergleich der zusammen mit dem Fernsehsignal übertragenen ersten Kennsignale mit dem abgespeicherten zweiten Kennsignal erfolgt und die beim Vorliegen eines positiven Vergleichsergebnisses ein Steuersignal (S4) für eine Decoderschaltung derart erzeugt, daß aus den einzelnen übertragenen Sprachen die durch das abgespeicherte zweite Kennsignal charakterisierte Sprache ausgewählt wird,
- wobei die Decoderschaltung, die in einem durch ein Kennsignal charakterisierten Sprachkanal übertragenen Signale extrahiert,
**dadurch gekennzeichnet, daß**
- sie eine weitere Speichereinheit aufweist zur Abspeicherung von Datensätzen, von denen jeder Benutzerführungsinformationen in jeweils einer von mehreren Sprachen enthält,
- und mittels des zweiten Kennsignals weiterhin einer der abgespeicherten Datensätze zur Darstellung von Benutzerführungsinformationen auf einer Anzeigeeinheit ausgewählt wird.

## Claims

1. Television signal receiving device for receiving television signals, in which the speech information accompanying the picture content is simultaneously offered in various languages, first code signals being transmitted in addition to picture and speech information, which first code signals characterize the individual languages transmitted and permit a selective access to each of said languages, comprising
- a control unit for inputting a second code signal,
- a memory unit for storing the second code signal,
- a control unit in which, when a television signal is received, the first code signals transmitted together with the television signal are compared with the stored second code signal and which, if a positive comparison result exists, generates a control signal (S4) for a decoder circuit in such a way that the language characterized by the stored second code signal is selected from the individual languages transmitted,
- the decoder circuit extracting the signals transmitted in a speech channel characterized by a code signal,
characterized in that
- it has a further memory unit for storing data records, each of which contains items of user control information in one of a plurality of languages in each case,
- and one of the stored data records is furthermore selected by means of the second code signal to display items of user control information on a display unit.

## Revendications

1. Dispositif de réception de signaux de télévision dans lesquels l'information vocale qui accompagne le contenu d'image est présentée simultanément en différentes langues, et dans lequel en plus de l'information d'image et de l'information vocale sont transmis des premiers signaux caractéristiques qui caractérisent les différentes langues transmises et permettent un accès sélectif à chacune de ces langues, et comportant
- une unité de commande pour l'introduction d'un second signal caractéristique,
- une unité de mémoire pour mémoriser le second signal caractéristique,
- une unité de commande, dans laquelle lors de la réception d'un signal de télévision, une comparaison est exécutée entre les premiers signaux caractéristiques transmis avec le signal de télévision et le second signal caractéristique mémorisé, et qui, dans le cas de la présence d'un résultat de comparaison positif, produit un signal de commande (S4) pour un circuit décodeur, de telle sorte que la langue caractérisée par le second signal caractéristique mémorisé, est sélectionnée à partir des différentes langues transmises,
- le circuit décodeur extrayant les signaux transmis dans un canal vocal caractérisé par un signal caractéristique, caractérisé en ce que
- il possède une autre unité de mémoire pour la mémorisation d'ensembles de données, dont chacune contient des informations de pilotage de l'utilisateur dans l'une respectivement de plusieurs langues, et
- en outre l'un des ensembles de données mémorisés est sélectionné, au moyen du second signal caractéristique, pour représenter des informations de guidage de l'utilisateur sur une unité d'affichage.
